# EUROPÄISCHE PATENTSCHRIFT

(11) **EP 2 834 537 B1**
(45) Veröffentlichungstag und Bekanntmachung des Hinweises auf die Patenterteilung: **18.05.2016**
(21) Anmeldenummer: 13709778.8
(22) Anmeldetag: 13.03.2013
(51) Int. Cl.: F16H 57/02

(54) **GETRIEBE MIT GEHÄUSE UND GEHÄUSE**
GEARBOX WITH HOUSING, AND HOUSING
BOÎTE DE VITESSES ÉQUIPÉE D'UN CARTER ET CARTER

(30) Priorität: 05.04.2012 DE 102012006927
(43) Veröffentlichungstag der Anmeldung: 11.02.2015
(73) Patentinhaber: Sew-Eurodrive GmbH & Co. KG, 76646 Bruchsal (DE)
(72) Erfinder: SIGMUND, Andreas, 76646 Bruchsal (DE)
(86) Internationale Anmeldenummer: PCT/EP2013/000746
(87) Internationale Veröffentlichungsnummer: WO 2013/149700

(56) Entgegenhaltungen:
- DE-A1-102006 040 722
- DE-A1-102007 058 902
- DE-B- 1 032 635

## Beschreibung

Die Erfindung betrifft ein Getriebe mit Gehäuse und ein Gehäuse.

Es ist allgemein bekannt, dass Getriebe jeweils ein Gehäuse aufweisen, beispielsweise aus Metall.

Aus der DE 10 2006 040 722 A1 ist ein aus einem Getriebe- und einem

Kupplungsgehäuse zusammengesetztes Aggregat bekannt. Dokument DE102006040722 A1 offenbart die Präambel der Ansprüche 1 und 12.

Aus der DE 1 032 635 A1 ist ein Zahnradgetriebe bekannt.

Aus der DE 10 2007 058 902 A1 ist ein Getriebe bekannt.

Der Erfindung liegt daher die Aufgabe zugrunde, ein Getriebe weiterzubilden, wobei die Umwelt geschützt werden soll.

Erfindungsgemäß wird die Aufgabe bei dem Getriebe nach den in Anspruch 1 angegebenen Merkmalen gelöst.

Wichtige Merkmale des Getriebes mit Gehäuse sind, dass das Gehäuse eine Transportöse aufweist, wobei in der Transportöse eine Schutzhülse angeordnet ist.

Von Vorteil ist dabei, dass die Umwelt geschützt wird, indem durch die Schutzhülse ein Oberflächenbereich des Gehäuses abgedeckt und somit vor Korrosion geschützt wird. Auf diese Weise ist die Standzeit des Getriebes hoch und daher muss das Getriebe erst nach einer langen Zeit ersetzt werden. Somit werden Ressourcen, wie Rohstoffe und Energie, geschont. Die Schutzhülse ermöglicht ein Aufhängen während des Durchfahrens einer Lackieranlage, ohne dass ein Transporthaken das Gehäuse beschädigt, wo dann Korrosion einsetzen könnte

Bei einer vorteilhaften Ausgestaltung ist die Schutzhülse aus Kunststoff oder Gummi und/oder das Gehäuse ist aus Metall, insbesondere Stahlguss oder Aluminiumguss. Von Vorteil ist dabei, dass eine einfache kostengünstige Herstellung als Kunststoffspritzgussteil ermöglicht ist.

Bei einer vorteilhaften Ausgestaltung ist die Transportöse in einer Putzleiste des durch Gießen, insbesondere Druckguss, hergestellten Gehäuses angeordnet. Von Vorteil ist dabei, dass eine einfache Herstellung der Transportöse ermöglicht ist.

Bei einer vorteilhaften Ausgestaltung ist die Transportöse ein durchgehendes, im Wesentlichen kreisförmiges oder zylindrisches Loch in einer Putzleiste, Tragwange oder in einem Tragsteg,

insbesondere wobei die Putzleiste, die Tragwange oder der Tragsteg aus dem restlichen Gehäuse hervorragt. Von Vorteil ist dabei, dass die Öse in einem mit dem restlichen Gehäuse stabil verbundenen Bereich anordenbar ist.

Bei einer vorteilhaften Ausgestaltung weisen die Schutzhülse an ihren Endbereichen, insbesondere an ihren axialen Endbereichen, radial hervorstehende Kragenabschnitte auf. Von Vorteil ist dabei, dass ein axiales Halten oder Begrenzen der Schutzhülse in der Öse ermöglicht ist, also in einem zylindrischen durchgehenden Loch in einem Stegabschnitt des Gehäuses.

Bei einer vorteilhaften Ausgestaltung weist die Schutzhülse zwischen den Kragenabschnitten einen zylindrischen Abschnitt auf,

insbesondere wobei der maximale Radialabstand der Kragenabschnitte größer ist als der maximale Radialabstand des zylindrischen Abschnitts. Von Vorteil ist dabei, dass somit ein Einklipsen der Schutzhülse ermöglicht ist.

Bei einer vorteilhaften Ausgestaltung halten und/oder begrenzen die Kragenabschnitte die Schutzhülse in der Öse axial. Von Vorteil ist dabei, dass ein einfaches Verbinden und Halten der Schutzhülse in der Öse ausführbar ist.

Bei einer vorteilhaften Ausgestaltung ist die Schutzhülse in die Transportöse geklebt, insbesondere also die Schutzhülse mit dem Gehäuse klebeverbunden ist. Von Vorteil ist dabei, dass eine besonders tragfähige Verbindung erreichbar ist und gleichzeitig ein sehr guter Korrosionsschutz, da sich der Klebestoff an die Oberfläche des Gehäuses auch im Mikrobereich dicht anschließt und somit Sauerstoff der Luft nicht an den vom Klebstoff abgedeckten Oberflächenbereich gelangen kann.

Bei einer vorteilhaften Ausgestaltung ist die Schutzhülse mit ihren Kragenabschnitten eingeklipst. Von Vorteil ist dabei, dass eine einfache Montage der Schutzhülse ermöglicht ist.

Bei einer vorteilhaften Ausgestaltung ist das Gehäuse lackiert, insbesondere an seiner gesamten äußeren Oberfläche mit Ausnahme des von der Schutzhülse abgedeckten Oberflächenabschnitts. Von Vorteil ist dabei, dass ein Korrosionsschutz anbringbar ist für das gesamte Gehäuse.

Bei einer vorteilhaften Ausgestaltung ist das Gehäuse lackiert, wobei der Lack und der Klebstoff und/oder das Material der Schutzhülse eine derartige relative Oberflächenspannung zueinander aufweisen, dass im Grenzbereich zwischen dem Lack und dem Material der Schutzhülse und/oder dem Klebstoff eine stoffschlüssige, insbesondere luftdichte, Verbindung entsteht, insbesondere keine Beabstandung, welche Luft hindurchlässt. Von Vorteil ist dabei, dass die Korrosion auch im Grenzbereich verhinderbar ist. Hierzu ist vorzugsweise ein derartiger Lack gewählt, dass bei Auftragen des Lacks eine stoffschlüssige Verbindung zum Klebstoff oder schutzhülsenmaterial entsteht, die auch nach Aushärten des Lacks bestehen bleibt. Wesentlich hierfür ist die Wahl einer möglichst geringen Oberflächenspannungsdifferenz zwischen den aneinander angrenzenden Materialien.

Wichtige Merkmale bei dem Gehäuse sind, dass das Gehäuse eine Transportöse aufweist,
wobei in der Transportöse eine Schutzhülse angeordnet ist.

Von Vorteil ist dabei, dass eine einfache Herstellung eines Korrosionsschutzes im Tragbereich herstellbar ist. Dadurch ist die Standzeit des Gehäuses hoch und die Umwelt somit geschont.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert:

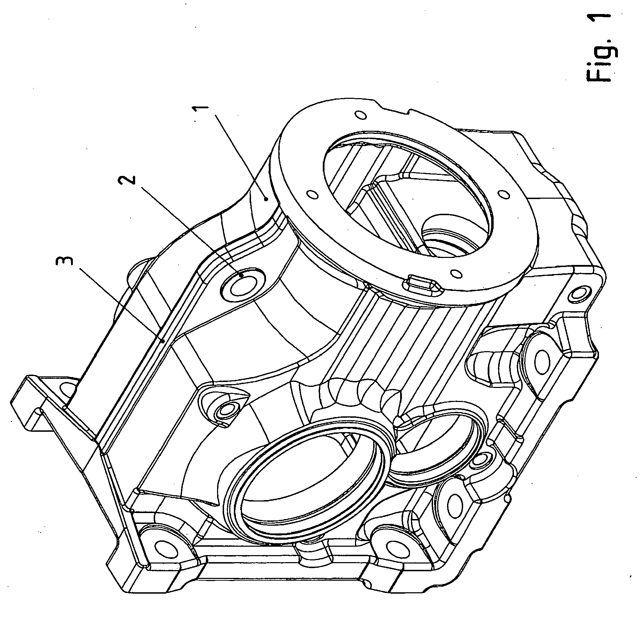

In der Figur 1 ist eine Schrägansicht eines erfindungsgemäßen Gehäuses 1 eines Getriebes gezeigt, wobei in einer Transportöse des Gehäuses eine Schutzhülse angeordnet ist.

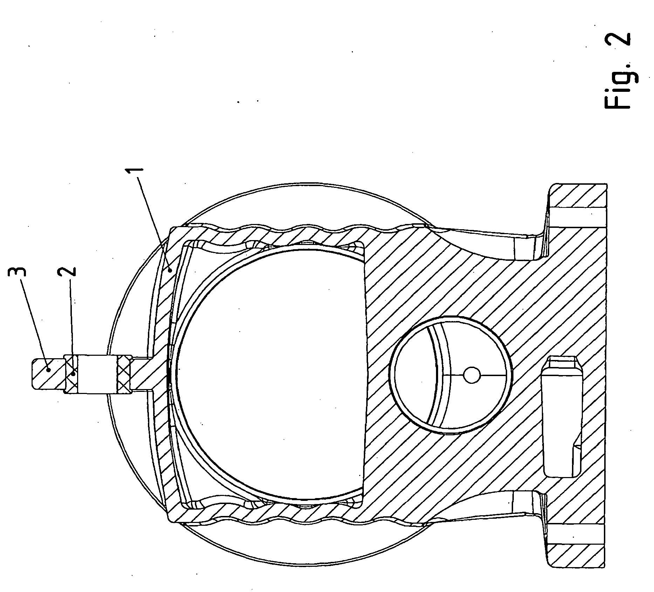

In der Figur 2 ist eine zugehörige Schnittansicht gezeigt.

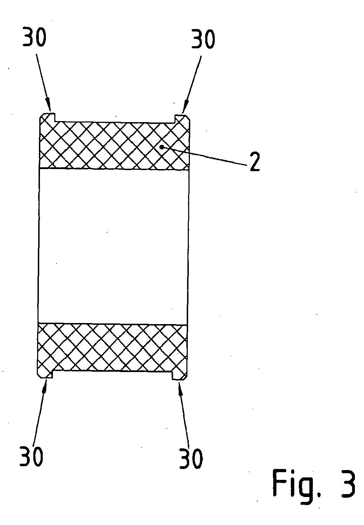

In der Figur 3 ist eine Schnittansicht der Schutzhülse 2 gezeigt.

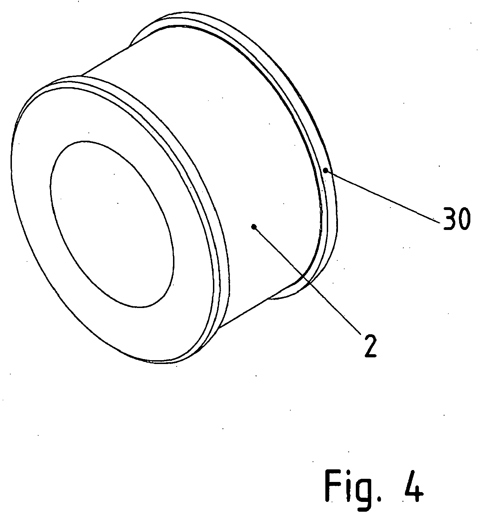

In der Figur 4 ist eine zugehörige Schrägansicht gezeigt.

Dabei weist das Gehäuse 1 des Getriebes eine gusstechnisch bedingte Putzleiste auf, in welcher eine Transportöse angeordnet ist.

Die Transportöse ermöglicht das einhaken eines Transporthakens, damit das schwere montierte, mit Verzahnungsteilen, Wellen, Lagern und/oder Schmieröl fertig hergestellte Getriebe oder auch nur leere Gehäuse 1 mittels eines Hubwerks transportierbar ist.

Insbesondere ist das am Transporthaken aufgehängte Gehäuse durch eine Lackieranlage hindurch bewegbar, wobei das Gehäuse lackierbar ist mit einem korrosionshemmenden oder korrosionsverhindernden Lack.

In der Transportöse ist eine Schutzhülse 2 angeordnet. Somit berührt der Transporthaken das Gehäuse nicht direkt und der von der Schutzhülse abgedeckte Bereich, ist mittels Klebstoff oder ähnlichem vor Korrosion schützbar - auch wenn er nicht lackierbar ist mittels der Lackieranlage.

Die Schutzhülse 2 ist vorzugsweise aus Kunststoff gefertigt. Alternativ ist auch ein Gummi verwendbar.

Die Schutzhülse 2 weist an ihren axialen Endbereichen jeweils einen ringförmigen Kragenabschnitt 30 auf, mit dem die Schutzhülse 2 axial begrenzt ist am Ösenrand.

Der maximale Radialabstand des ringförmigen Kragenabschnitts 30 ist größer als der maximale Radialabstand des axial zwischen den Kragenabschnitten 30 angeordneten Abschnitts der Schutzhülse 2. Dieser Abschnitt gleicht im Wesentlichen einem Hohlzylinder.

Bei Ausführung aus elastisch verformbarem Kunststoff ist ein Einklipsen der Schutzhülse 2 in die Öse ausführbar. Denn beim axial gerichteten Einschieben der Schutzhülse 2 in die Transportöse wird die Schutzhülse 2, insbesondere der Kragenabschnitt, verformt und sobald der in Einschieberichtung vorne angeordnete Kragenabschnitt 30 den axialen Endbereich überwunden hat, dehnt sich der Kragenabschnitt 30 auf seine ursprüngliche Form aus und hakt sich somit an der an die Öse angrenzenden Kante ein.

Das Gehäuse 1 des Getriebes ist aus Metallguss hergestellt. Um ein druckgussfähiges Gehäuse zu erhalten wird beim Gießen das Material im Bereich der Putzleiste zugeführt. Das Formwerkzeug weist zwei Formen auf, wobei die erste die linke und die andere die rechte Gehäuseseite formt. Nach dem Erstarren des eingegossenen Materials und nach nachfolgendem Auseinanderziehen der Formen wird der als Tragwange oder Tragsteg aus dem restlichen Gehäuse hervor ragende, als Putzleiste bezeichnete Gehäusebereich geglättet, also von Resten befreit.

Bei einem weiteren erfindungsgemäßen Ausführungsbeispiel ist die Schutzhülse 2 mittels eines Kunststoffspritzgussverfahrens angespritzt am metallischen Gehäuse, insbesondere Stahlgussgehäuse oder Aluminium-Druckgussgehäuse. Somit ist die Schutzhülse mit dem Gehäuse als Verbundteil ausgeführt und im Gegensatz zur obigen Figurenbeschreibung wird kein Klebstoff zwischen Schutzhülse 2 und Gehäuse 1 benötigt.

### Bezugszeichenliste

1 Gehäuse des Getriebes
2 Schutzhülse, in der Transportöse angeordnet
3 Putzleiste
30 ringförmiger Kragenabschnitt

## Patentansprüche

1. Getriebe mit Gehäuse (1),
wobei das Gehäuse (1) eine Transportöse aufweist,
**dadurch gekennzeichnet, dass**
in der Transportöse eine Schutzhülse (2) angeordnet ist.

2. Getriebe nach mindestens einem der vorangegangenen Ansprüche,
**dadurch gekennzeichnet, dass**
die Schutzhülse (2) aus Kunststoff oder Gummi ist und/oder das Gehäuse (1) aus Metall, insbesondere Stahlguss oder Aluminiumguss, ist.

3. Getriebe nach mindestens einem der vorangegangenen Ansprüche,
**dadurch gekennzeichnet, dass**
die Transportöse in einer Putzleiste (3) des durch Gießen, insbesondere Druckguss, hergestellten Gehäuses (1) angeordnet ist.

4. Getriebe nach mindestens einem der vorangegangenen Ansprüche,
**dadurch gekennzeichnet, dass**
die Transportöse ein durchgehendes, im Wesentlichen kreisförmiges oder zylindrisches Loch in einer Putzleiste (3), Tragwange oder in einem Tragsteg ist,
insbesondere wobei die Putzleiste (3), die Tragwange oder der Tragsteg aus dem restlichen Gehäuse (1) hervorragt.

5. Getriebe nach mindestens einem der vorangegangenen Ansprüche,
**dadurch gekennzeichnet, dass**
die Schutzhülse (2) an ihren Endbereichen, insbesondere an ihren axialen Endbereichen, radial hervorstehende Kragenabschnitte (30) aufweisen.

6. Getriebe nach Anspruch 5,
**dadurch gekennzeichnet, dass**
die Schutzhülse (2) zwischen den Kragenabschnitten (30) einen zylindrischen Abschnitt aufweist,
insbesondere wobei der maximale Radialabstand der Kragenabschnitte (30) größer ist als der maximale Radialabstand des zylindrischen Abschnitts.

7. Getriebe nach Anspruch 5 oder 6,
**dadurch gekennzeichnet, dass**
die Kragenabschnitte (30) die Schutzhülse (2) in der Öse axial halten und/oder begrenzen.

8. Getriebe nach mindestens einem der vorangegangenen Ansprüche,
**dadurch gekennzeichnet, dass**
die Schutzhülse (2) in die Transportöse geklebt ist, insbesondere also die Schutzhülse (2) mit dem Gehäuse (1) klebeverbunden ist.

9. Getriebe nach mindestens einem der vorangegangenen Ansprüche,
**dadurch gekennzeichnet, dass**
die Schutzhülse (2) mit ihren Kragenabschnitten (30) eingeklipst ist.

10. Getriebe nach mindestens einem der vorangegangenen Ansprüche,
**dadurch gekennzeichnet, dass**
das Gehäuse (1) lackiert ist, insbesondere an seiner gesamten äußeren Oberfläche mit Ausnahme des von der Schutzhülse (2) abgedeckten Oberflächenabschnitts.

11. Getriebe nach mindestens einem der vorangegangenen Ansprüche,
**dadurch gekennzeichnet, dass**
das Gehäuse (1) lackiert ist, wobei der Lack und der Klebstoff und/oder das Material der Schutzhülse (2) eine derartige relative Oberflächenspannung zueinander aufweisen, dass im Grenzbereich zwischen dem Lack und dem Material der Schutzhülse (2) und/oder dem Klebstoff eine stoffschlüssige, insbesondere luftdichte, Verbindung entsteht, insbesondere keine Beabstandung, welche Luft hindurchlässt.

12. Gehäuse (1) für ein Getriebe nach mindestens einem der vorangegangenen Ansprüche,
**dadurch gekennzeichnet, dass**
das Gehäuse (1) eine Transportöse aufweist,
wobei in der Transportöse eine Schutzhülse (2) angeordnet ist.

## Claims

1. A transmission with a casing (1),
wherein the casing (1) has a lifting eye,
**characterised in that**
a protective sleeve (2) is arranged in the lifting eye.

2. A transmission according to at least one of the preceding claims,
**characterised in that**
the protective sleeve (2) is made of plastics material or rubber and/or the casing (1) is made of metal, in particular cast steel or cast aluminium.

3. A transmission according to at least one of the preceding claims,
**characterised in that**
the lifting eye is arranged in a fettled ridge (3) of the casing (1) which is produced by casting, in particular by die casting.

4. A transmission according to at least one of the preceding claims,
**characterised in that**
the lifting eye is a continuous, substantially circular or cylindrical hole in a fettled ridge (3), lifting flange or in a lifting bar,
in particular with the fettled ridge (3), the lifting flange or the lifting bar projecting out of the rest of the casing (1).

5. A transmission according to at least one of the preceding claims,
**characterised in that**
the protective sleeve (2) has at its end regions, in particular at its axial end regions, radially projecting collar portions (30).

6. A transmission according to Claim 5,
**characterised in that**
the protective sleeve (2) has a cylindrical portion between the collar portions (30),
in particular the maximum radial spacing between the collar portions (30) being greater than the maximum radial spacing of the cylindrical portion.

7. A transmission according to Claim 5 or 6,
**characterised in that**
the collar portions (30) axially hold and/or limit the protective sleeve (2) in the eyelet.

8. A transmission according to at least one of the preceding claims,
**characterised in that**
the protective sleeve (2) is glued into the lifting eye, in particular therefore the protective sleeve (2) is connected to the casing (1) by gluing.

9. A transmission according to at least one of the preceding claims,
**characterised in that**
the protective sleeve (2) is clipped in with its collar portions (30).

10. A transmission according to at least one of the preceding claims,
**characterised in that**
the casing (1) is painted, in particular on its entire outer surface with the exception of the surface portion covered by the protective sleeve (2).

11. A transmission according to at least one of the preceding claims,
**characterised in that**
the casing (1) is painted, the paint and the adhesive and/or the material of the protective sleeve (2) having such a relative surface tension in relation to each other that in the region between the paint and the material of the protective sleeve (2) and/or the glue an in particular airtight connection by means of a material bond is produced, in particular no spacing which allows air through is produced.

12. A casing (1) for a transmission according to at least one of the preceding claims, **characterised in that**
the casing (1) has a lifting eye,
with a protective sleeve (2) being arranged in the lifting eye.

## Revendications

1. Boîte de vitesses équipée d'un carter (1), sachant que le carter (1) présente un oeillet de transport,
**caractérisée en ce qu'**une douille de protection (2) est disposée dans l'oeillet de transport.

2. Boîte de vitesses selon la revendication 1, **caractérisée en ce que** la douille de protection (2) est en matière plastique ou en caoutchouc, et/ou le carter (1) est en métal, en particulier en acier moulé ou en fonte d'aluminium.

3. Boîte de vitesses selon au moins une des revendications précédentes, **caractérisée en ce que** l'oeillet de transport est disposé dans une moulure de propreté (3) du carter (1) fabriqué par coulée, en particulier par coulée sous pression.

4. Boîte de vitesses selon au moins une des revendications précédentes, **caractérisée en ce que** l'oeillet de transport est un orifice traversant, essentiellement circulaire ou cylindrique, dans une moulure de propreté (3), une joue porteuse ou une nervure porteuse, sachant notamment que la moulure de propreté (3), la joue porteuse ou la nervure porteuse dépasse du reste du carter (1).

5. Boîte de vitesses selon au moins une des revendications précédentes, **caractérisée en ce que** la douille de protection (2) présente dans ses régions terminales, en particulier dans ses régions terminales axiales, des parties formant collet (30) dépassant radialement.

6. Boîte de vitesses selon la revendication 5, **caractérisée en ce que** la douille de protection (2) présente une partie cylindrique entre les parties formant collet (30), sachant notamment que la distance radiale maximale des parties formant collet (30) est supérieure à la distance radiale maximale de la partie cylindrique.

7. Boîte de vitesses selon la revendication 5 ou 6, **caractérisée en ce que** les parties formant collet (30) délimitent et/ou maintiennent axialement la douille de protection (2) dans l'oeillet.

8. Boîte de vitesses selon au moins une des revendications précédentes, **caractérisée en ce que** la douille de protection (2) est collée dans l'oeillet de transport, en particulier donc la douille de protection (2) est assemblée par collage au carter (1).

9. Boîte de vitesses selon au moins une des revendications précédentes, **caractérisée en ce que** la douille de protection (2) est encliquetée par ses parties formant collet (30).

10. Boîte de vitesses selon au moins une des revendications précédentes, **caractérisée en ce que** le carter (1) est peint, en particulier sur toute sa surface extérieure à l'exception de la partie de surface recouverte par la douille de protection (2).

11. Boîte de vitesses selon au moins une des revendications précédentes, **caractérisée en ce que** le carter (1) est peint, sachant que la peinture et le produit adhésif et/ou le matériau de la douille de protection (2) présentent les uns par rapport aux autres une tension superficielle relative telle qu'on obtient un assemblage par liaison de matière, en particulier étanche à l'air, en particulier sans espacement laissant passer l'air, dans la région de jonction entre la peinture et le matériau de la douille de protection (2) et/ou le produit adhésif.

12. Carter (1) pour une boîte de vitesses selon au moins une des revendications précédentes, **caractérisé en ce que** le carter (1) présente un l'oeillet de transport, sachant qu'une douille de protection (2) est disposée dans l'oeillet de transport.
